# EUROPEAN PATENT SPECIFICATION

(11) **EP 2 601 549 B1**
(45) Date of publication and mention of the grant of the patent: **04.10.2017**
(21) Application number: 11791332.7
(22) Date of filing: 08.08.2011
(51) Int. Cl.: G02B 6/42

(54) **OPTICAL COUPLING SYSTEM**
OPTISCHES KOPPLUNGSSYSTEM
SYSTÈME DE COUPLAGE OPTIQUE

(30) Priority: 06.08.2010 WO PCT/IB2010/002580
(43) Date of publication of application: 12.06.2013
(73) Proprietor: Amphenol FCI Asia Pte. Ltd., Singapore 368328 (SG)
(72) Inventor: STRICOT, Yves, F-78450 Villepreux (FR); YABRE, Gnitabouré, F-28300 Mainvilliers (FR); DROESBEKE, Gert, B-2440 Geel (BE)
(74) Representative: Hess, Peter K. G.
(86) International application number: PCT/IB2011/002078
(87) International publication number: WO 2012/017319

(56) References cited:
- FR-A1- 2 871 244
- US-A1- 2003 215 234
- US-A1- 2007 024 959
- US-A1- 2009 141 242
- US-B1- 6 240 116

## Description

### FIELD OF THE INVENTION

The invention relates to optical coupling systems.

### BACKGROUND OF THE INVENTION

Most communication systems involve a number of system-cards. Such cards are usually manufactured as so-called printed circuit boards (PCBs). Due for example to the Internet, requirements in data rates are continuously increasing. It becomes difficult to guarantee good signal integrity over electrical lines.

To answer to this bandwidth demand, high speed systems are built with optical layer (optical fibre or planar waveguide) embedded in PCBs. Indeed, light does not suffer from the same limitations as electricity. Optical coupling devices are then used to interconnect two optical layers of a PCB in intra-card applications or to interconnect an optical layer of a motherboard with an optical layer of a daughterboard or of an outside system-card in inter-card applications.

When a coupling device is designed, it is not always known for which application it is intended. Thus, coupling devices must be able to transfer information bidirectionally, for example from any channel of a motherboard to a corresponding channel of the daughter-card and the opposite way.

There is still a requirement to improve the versatility of interconnect of optical communication system.

### SUMMARY OF THE INVENTION

The optical coupling system comprises a first and a second optical interfaces.

The first optical interface comprises a first set of rows. The rows of the first set are spaced apart one from another by a first pitch. Each row of the first set is associated to a corresponding row of an optical interface of an optical circuit board. Advantageously, each row of the first set comprises a plurality of first transmission regions, each adapted to be optically coupled, respectively, to a corresponding transmission region of the optical interface of the optical circuit board.

The second optical interface comprises a second set of rows. The rows of the second set are spaced apart one from another by a second pitch, which is different from the first pitch. Each row of the second set is associated to a corresponding row of an optical interface of a optical device. Advantageously, each row of the second set comprises a plurality of second transmission regions, which are each adapted to be optically coupled respectively to a corresponding transmission region of the optical interface of the optical device.

For many applications, the first and second rows comprise several transmission regions but in particular cases a row may comprise only one transmission region.

Advantageously, each second transmission region is optically associated with a respective first transmission region.

Advantageously, the optical coupling system further comprises a light beam forming structure.

The light beam forming structure optically couples one optical interface among the first optical interface and the second optical interface to one of the optical interfaces among the optical interface of the optical device and the optical interface of the optical circuit board.

A reflective arrangement transmits light between the first and second interfaces. It comprises at least one reflective portion which offsets light transmitted between a first row of the first set of rows and a corresponding first row of the second set of rows with respect to light transmitted between a second row of the first set of rows and a corresponding second row of the second set of rows.

With these features, a more versatile system is provided, because the coupling system can easily be tailored to the requirements of the board manufacturer, which can therefore use a well mastered manufacture process.

Advantageously, the coupling device system according to the invention has a great number of transmission optical paths for an optical layer having a given thickness.

Advantageously, the coupling device system according to the invention has a number of optical paths varying according to the technical application field or according to the manufacture requirements.

With the coupling device system according to the invention, a PCB manufacturer can use, when needed, an optical layer having a waveguide density different from the standard one. Thus, the PCB manufacturer could produce electronic system with transmission rate higher or slower than the standard one.

In some embodiments, one might also use one or more of the features defined in the dependent claims or for instance one of the following features:
- the light beam forming structure is made on the reflective arrangement,
- the optical circuit board has a top surface, and a cut-out having a straight face normal to said top surface, at least two rows of the optical interface of the optical circuit board being formed in the straight face,
- the cut-out has a straight parallelepiped shape,
- the optical device is a material-transfer ferrule, said material-transfer ferrule having an optical interface with a set of rows, each row being associated to a corresponding row of the second set of rows of the optical coupling system,
- each row of the optical interface of the material-transfer ferrule has a plurality of transmission regions, each optically coupled respectively to a corresponding transmission region of a corresponding row of the second set of rows of the optical coupling system,
- a second optical coupling system is provided and at least one of the first pitch and the second pitch of the first optical coupling system differs from the respective first or second pitch of the second optical coupling system.

### BRIEF DESCRIPTION OF THE DRAWINGS

Other characteristics and advantages of the invention will readily appear from the following description of eleven of its embodiments, provided as non-limitative examples, and of the accompanying drawings.

On the drawings:
- Fig. 1 is a partial perspective exploded view of an optical system according to a first embodiment,
- Fig. 2 is a partial exploded view of the system of Fig. 1 along another perspective, partly sectioned along line II-II on Fig. 1
- Fig. 3 is a partly exploded sectional view, taken along line III-III of Fig. 1, of the optical system of Fig. 1,
- Fig. 4 is a side view according to a second embodiment of an optical system,
- Fig. 5 is a partial side view of an optical coupling device according to a third embodiment,
- Fig. 6 is a sectional view along line III-III of Fig. 1, of an optical system according to a fourth embodiment,
- Fig. 7 is a partial side view of an optical coupling device according to a fifth embodiment,
- Fig. 8 is a sectional view along line III-III of Fig. 1, of an optical coupling device according to a sixth embodiment,
- Fig. 9 is a sectional view along line III-III of Fig. 1, of an optical system according to a seventh embodiment,
- Fig. 10 is a schematic view of an optical beam passing through the optical system according to the invention,
- Fig. 11 is a partial side view of an optical coupling device according to a variant of the third embodiment,
- Fig. 12 is a partial side view of an optical coupling device according to another variant of the third embodiment,
- Fig. 13 is a view partially corresponding to Fig. 3 for an eighth embodiment,
- Fig. 14 is a view corresponding to Fig. 13 for a ninth embodiment,
- Fig. 15 is a bottom perspective view of an optical coupling device according to a tenth embodiment,
- Fig. 15a and 15b are views corresponding to Fig. 13, taken as sections along lines XVa-XVa and XVb-XVb, respectively, in Fig. 15, and
- Fig. 16 is a view corresponding to Fig. 15 for an eleventh embodiment.

On the different Figures, the same reference signs designate like or similar elements.

### DETAILED DESCRIPTION

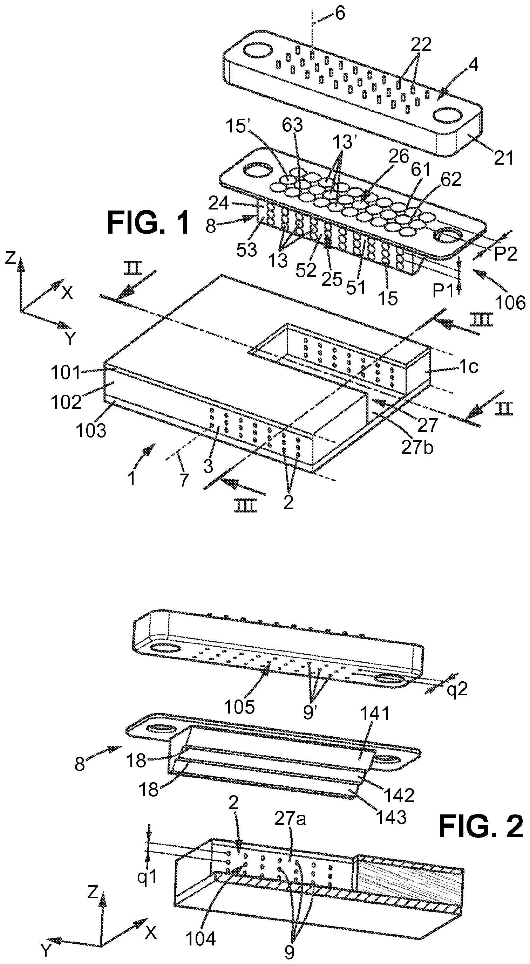

Fig. 1 partially shows a hybrid or full optical PCB 1 for example a backplane. Hereinafter this backplane 1 will also be referred to as the layer stack 1. In particular, the layer stack 1 comprises three superimposed layers such as, as shown, a first top cladding layer 101, a second transmission optical layer 102 below the first layer, and a third bottom cladding layer 103 below the second layer.

The terms "top", "bottom", "up", "down" or the like are given in reference to the direction Z, normal to the top surface of the PCB, and pointing toward a mating optical device 4 to be optically coupled to the PCB. The top surface of the PCB extends parallel to an X-Y plane, with X and Y being artificially defined. For example, X corresponds to the direction of propagation of light in layer 102 and Y to the transverse direction.

The optical layer 102 of the layer stack 1 is made of a plurality of tubes 2 integrated or embedded in a body 3 having a lower refractive index than the tubes 2. Thus, the tubes 2 and the body 3 constitute respectively the cores and the cladding of waveguides.

The cores 2 are distributed in the body 3 between three planes parallel to the X-Y plane. In each plane, seven cores 2 extend along the X direction. The cores 2 are separated one from another by a fixed distance along the Y direction. Embedded waveguides may be polymer waveguides, glass sheet waveguides or waveguides obtained by embedded fibre technology, or the like.

A part of the PCB is removed from Figs. 1 and 2 to ease the representation. What appears as a face 1c is in reality not a face but is internal to the PCB 1.

As can be seen on Fig. 1 and 2, a cut-out 27 is formed in the PCB 1. In particular, the cut-out 27 is shaped with a very simple form of a right parallelepiped. The cut-out is defined by a straight wall 27a (Fig. 2) on the side of the cut-out where the optical waveguides extend. This wall extends parallel to the Y-Z plane. If necessary, as shown, other walls of the cut-out are made straight, such as the wall opposed (facing) to the wall 27a, which also extends parallel to the Y-Z plane. The other two walls of the cut-out are for example made to extend in the X-Z plane. The cut-out also has a plane bottom 27b, as shown on Fig. 1.

The wall 27a corresponds to an optical interface of the PCB. All cores 2 run into the cut-out 27 to define the optical interface 104 of the PCB. This optical interface 104 comprises discrete light transmission regions (shown as little circles 9), which are the openings of the cores 2. The light transmission regions are arranged as an array of rows and columns. Rows are spaced apart from one another along the direction Z (depth direction) by a given pitch q₁. For example, the pitch of this interface is constant, meaning that the pitch between two neighbouring rows is constant. In the present example, this pitch is equal to 125 micrometers (µm). Columns are spaced apart from one another along the direction Y. In the present example, each layer has a similar arrangement. However, alternatively, two rows might not have the same spacing between neighbour light transmission regions, and/or could be laterally shifted with respect to one another along the direction Y. The spacing of transmission regions along the direction Y in any given row might be constant or not, depending on the requirements. For example, in the present drawing, the spacing between neighbour transmission regions of any given row is set constant to 250 µm, and the rows are identical.

Optical signals, transferred to or from a mating optical device 4, such as an optical device or optoelectronic device or an other PCB, are provided over a first optical path 6 to/from the cores 2 of the layer stack 1, which cores 2 provide a second optical path 7 for the optical signals parallel to the X-Y plane. As shown on Fig. 1, the optical device 4 comprises for example a mechanical - transfer ferrule ("MT-ferrule") comprising a high precision sleeve 21 in which ends of optical fibres 22 extend in precisely defined relative locations. As shown on Fig. 2, the mating optical device 4 has an optical interface 105 defined as the set of optic fibre ends directed toward the PCB. In the present drawing, this interface extends parallel to the X-Y plane.

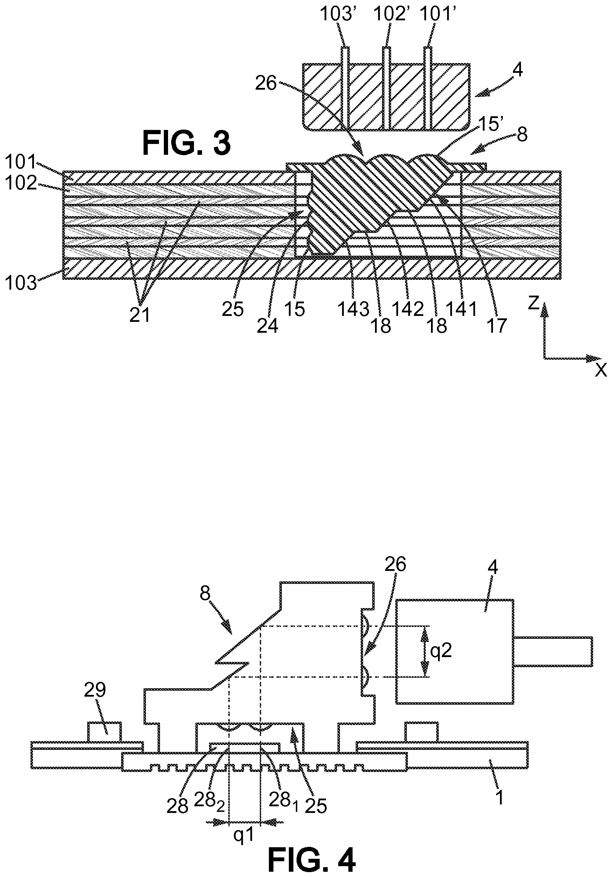

Basically, the optical interface 105 of the mating connector has the same number of transmission regions 9' as the optical interface 104 of the PCB. In addition, the optical interface 105 has the same number of rows as the optical interface 104 of the PCB (here three rows 101', 102', 103' as shown on Fig. 3). Each row of the optical interface 105 of the mating optical device corresponds to a respective given row of the optical interface 104 of the PCB. Each transmission region 9' of the optical interface 105 of the mating optical device corresponds to a respective transmission region 9 of the optical interface 104 of the PCB. This means that transmissions regions 9 and 9' are individually et respectively associated and that light normally exited through the transmission region of one of the interfaces is transmitted to the corresponding transmission region of the other interface (see Fig. 2).

Rows of the interface 105 are spaced apart from one another along the X direction by a given pitch q₂. In particular, the pitch between rows of this interface is different from the pitch of the rows of the interface 104 of the PCB. For example, the pitch of this interface is constant, meaning that the pitch between two neighbouring rows is constant. In the present example, this pitch is equal to 250 micrometers (µm), in particular an integral multiple number of that of the interface 104.

Columns of the interface 105 are spaced apart from one another along the Y direction. The spacing of transmission regions along the Y direction corresponds to that of the interface 104 of the PCB 1. For example, in the present drawing, the spacing between neighbour transmission regions of any given row is set constant to 250 µm, and the rows are identical.

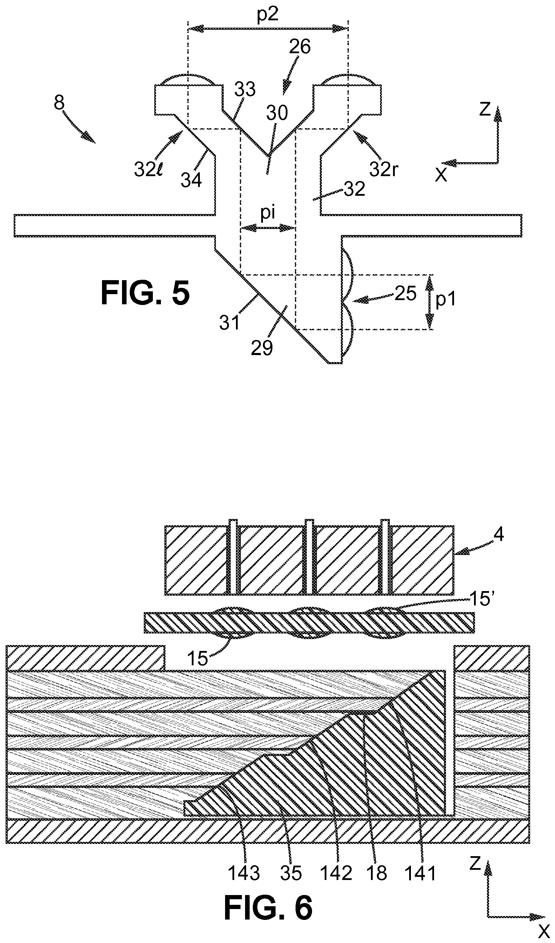

In order to achieve an optimal optical coupling between the first and second optical paths, that are perpendicular to each other for the optical system here, an optical coupling system 106 is provided for alignment purposes (see Fig. 6). In the present example, the optical coupling system 106 is provided as a single unitary component named "optical coupling device" 8, although this is not necessarily always the case, as will be shown below for other embodiments.

The coupling device 8 is, for example, a piece manufactured by moulding a translucent suitable material by gathering several individual pieces or by over moulding a structure. The optical coupling device 8 comprises a first face 24 defining a first optical interface 25 which is optically coupled to the optical interface of the PCB. The first optical interface 25 has transmission regions 13 arranged in rows and columns, and which face, in free space (for example through a translucent coupling medium such as air or a suitable glue), a corresponding transmission region 9 of the interface of the PCB. The arrangement of the first optical interface 25 with rows directly derives from that of the printed circuit board, and it will not be described in further details here. This first set of rows has at least a first row 51, a second row 52 and a third row 53. The rows of this interface are spaced apart from one another along a given first pitch p₁, which corresponds to the pitch q₁.

The optical coupling device 8 comprises a second face which, in the present case, extends normal to the first face, i.e. extends parallel to the X-Y plane. It defines a second optical interface 26 which is optically coupled to the optical interface of the mating optical device 4. The second optical interface 26 has transmission regions 13' arranged in rows and columns, and which face (for example through a translucent coupling medium such as air or a suitable glue), a corresponding transmission region 9' of the interface of the mating optical device 4. The arrangement with rows 61 of the second optical interface 26 directly derives from that of the mating optical device 4, and it will not be described in further details here. This second set of rows 61 has a first row (here corresponding to the right-most row 101' of the ferrule on Fig. 3), a second row 62 (here corresponding to the central row 102' of the ferrule), and a third row 63 (here corresponding to the last row 103' of the ferrule). Rows of this interface are spaced apart from one another along a given second pitch p₂, which corresponds to the pitch q2 and which differs from the first pitch p1.

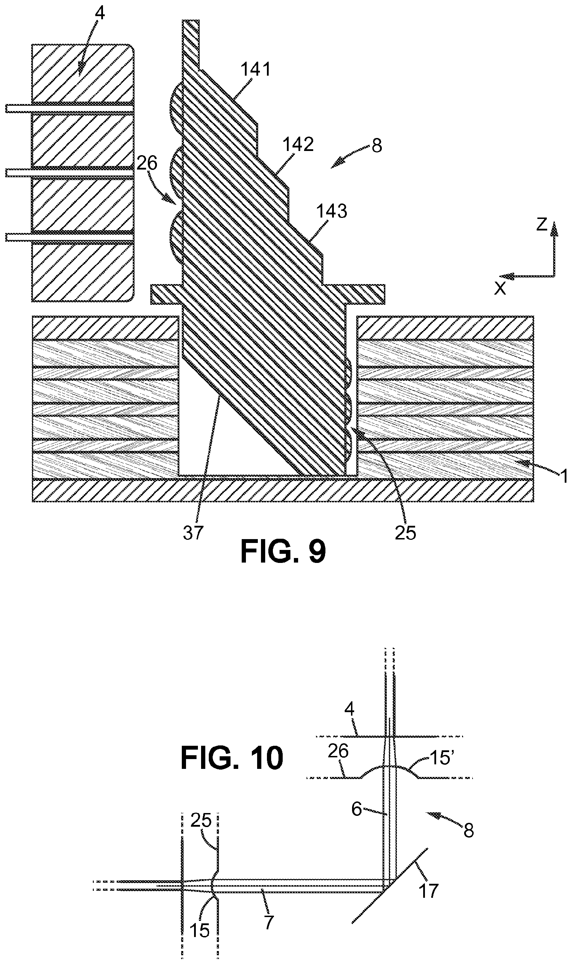

As shown on Fig. 10, an optical path is defined between the first and second interfaces 25, 26 of the coupling device 8. Namely, diverging light entering the coupling device 8 at its first interface 25, coming from the interface of the printed circuit board 1 propagates through the coupling device 8 to the second interface 26 as a substantially collimated light beam, and is focussed into the interface of the mating optical device 4. Light propagates in the opposite direction in a similar way.

In particular, each transmission region of each interface of the coupling device 8 is provided with a light beam forming structure 15, 15' such as a lens. The lenses 15 optimise the optical coupling of the optical signals of the cores 2 to/from the coupling device 8. The lenses 15' optimise the optical coupling of the optical signals of the ferrule 4 to/from the coupling device 8. Since lenses 15 and 15' focus the optical signals at the entry of each core 2 and respectively at the entry of each optical fibre 22, the manufacture tolerance of the coupling device 8, the ferrule 4 and the layer stack 1 are increased in comparison with an optical coupling system without lenses.

As shown in the present example, the lenses 15, 15' may form an integral part of the coupling device 8. They are located at the first and second interfaces. They may be of the Fresnel-type or of the aspheric type, for example. It will be appreciated that, for each interface, all lenses of the interface may be identical.

According to the first embodiment, shown on Figs 1 to 3, the deflection of optical signals between the first optical path 6 and the second perpendicular optical path 7 may be achieved by employing a reflective arrangement 17 that is integrally formed with the optical coupling device 8. For example, the reflective arrangement 17 provides total reflection and comprises, for example, continuous facets 141, 142, 143 angled at 45° with respect to the X-Y plane, and extending parallel to the Y direction. Each facet 141, 142, 143 is associated with a respective core 2 of the optical layer, and with a respective row 101', 102', 103' of the mating optical device 4.

The facets 141, 142 and 143 are positioned so as to cope with the pitch difference between the two interfaces of the coupling device 8. In other words, the reflective arrangement 17 is used to offset light transmitted between the first layer of cores 2 of the PCB 1 and the corresponding row 101' of the optical device 4 with respect to the light transmitted between the second layer of cores 2 of the PCB 1 and the corresponding row 102' of the optical device 4. The same is true for all rows, in this example.

Two neighbouring facets are separated by a transition portion 18 which is not necessarily reflective. In the present case, where the pitch between the rows of the PCB 1 is smaller than that between those of mating device 4, the transition portions extend with a lower angle with respect to the horizontal axis X, compared to the mirrors. In the present example, this angle is 0, i.e., the transition regions extend horizontally. Preferably, the angles inside the coupling device 8 between any facet 141, 142, 143 and the neighbour transition portion 18 is more than 90°, to ease the unmolding. In the present example, these angles are 135° and 225° with respect to X-Y plane.

For a given pitch of the mating optical device 4, this optical coupling device enables to provide a PCB 1 which is thinner than if a single continuous mirror was used in the coupling device 8. When manufacturing the multi-optical-layered PCB, a versatile process can be used. According to a variant not represented, the lenses 15 are made on facets 141, 142, 143, for example by moulding; the lenses 15' being moulded on the second optical interface 26.

According to another variant not represented, the lenses 15' are made on facets 141, 142, 143; the lenses 15 being moulded on first optical interface 25.

Fig. 4 shows a second embodiment, which will be described by reference to the first embodiment. Mainly, in the embodiment of Fig. 4, the first interface 25 of the optical coupling device 8 is not optically associated with waveguides of a PCB, as in the first embodiment, but directly with opto-electronic devices 28 attached on or part of an electrical PCB 1. The PCB 1, the opto-electronic devices 28 attached thereon, and their electronic command 29 fixed thereon form a so-called "optical engine", or "optical sub-assembly" or "osa", such as a reception osa (so-called "rosa") or a transmission osa (so-called "tosa"). The opto-electronic devices 28 may comprise suitable LASERs 28₁, or photo-detectors 28₂, which are arranged in rows and columns as an optical interface. For example, a row of LASERs 28₁ (only one represented on Fig. 4) is spaced from a row of photo-diodes 28₂ (only one represented on Fig. 4) by a given spacing q₁, say for example 1 millimetre and the rows of the ferrule 4 are spaced apart from one another by a spacing q₂ of 250 micrometers. The spacing between the rows of the interface coupled to the PCB is enough for placing the opto-electronic components, and enabling efficient cooling thereof.

It is possible to provide numerous groups of optical coupling devices, depending on the requirements of the end-users, such as one first group of coupling devices for applications corresponding to the first embodiment, and a second group of coupling devices for applications corresponding to the second embodiment.

Fig. 5 now shows a third embodiment of a coupling device 8 for an optical system according to the invention. This embodiment is described by reference to Fig. 1. In this example, the optical coupling device 8 comprises a first part 29 and a second part 30, which are integrally formed together as a single component. The first part 29 comprises the first interface 25 and a first mirror 31 which is used to reflect the optical signals from parallel to the plane in which they extend at the first interface to parallel to the plane in which they extend at the second interface. In the present case, a 90° reflection of signals transmitted at the first interface is achieved by a planar mirror 31 extending at 45° with respect to the X-Y plane. Hence, the intermediate pitch pᵢ after this reflection is the same as that at the first interface p₁.

The second part 30 provides the offsetting of the optical signals, namely transforms the intermediate pitch pᵢ to the different pitch p₂ at the second interface 26. For example, in the present case where there is an even number of rows, the second part 30 is symmetrical with respect to a central plane parallel to the Y-Z plane. The second part 30 is sensibly Y-shaped, comprising a foot 32 at the junction with the first part 29, and two branches 321 and 32r. Each branch comprises two reflective mirrors 33, 34 to offset the light signals. The present example shows two facing mirrors 33 and 34 which extend at 45° of the Y-Z plane, but other designs are possible. In the present example, the second part 30 is designed to broaden the second pitch with respect to the intermediate pitch, but a "narrowing" alternative version could be easily designed.

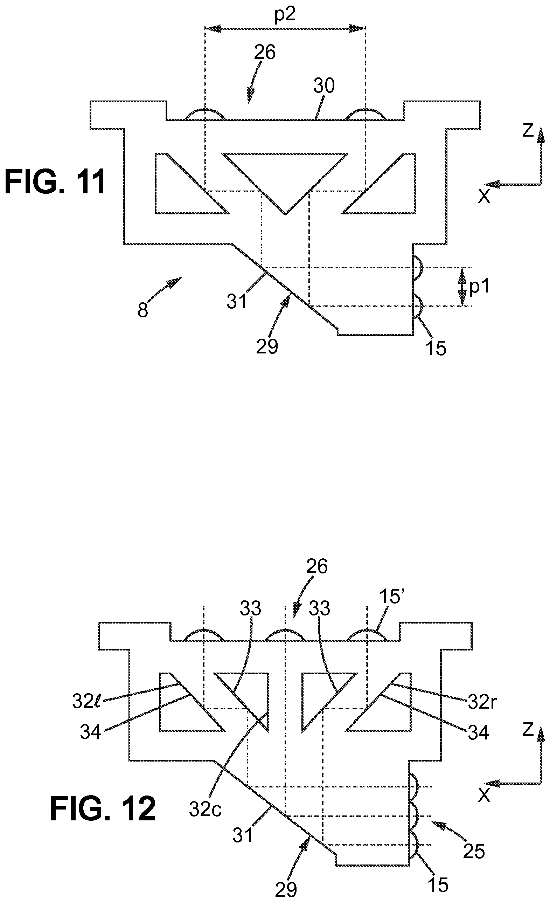

Fig.11 shows a variant of the coupling device according to the third embodiment. The coupling device according to this variant, is similar to the coupling device shown on figure 5. At least three mirrors are used for guiding the light signals so as to adapt the pitches on the first and second interfaces. When the complexity of the coupling device becomes too high, it is manufactured by gathering several individual pieces rather than being moulded as a single piece.

According to a variant of the third embodiment represented on Fig. 12, the optical coupling device 8 comprises two V-shaped branches 321, 32r and a central branch 32c which is not provided with a mirror or a reflective facet. It also comprises three rows of lenses 15 configured for collimating the light beams which are outputted from the coupling device 8.

The coupling device according to this variant may also be manufactured by fixing together individual pieces.

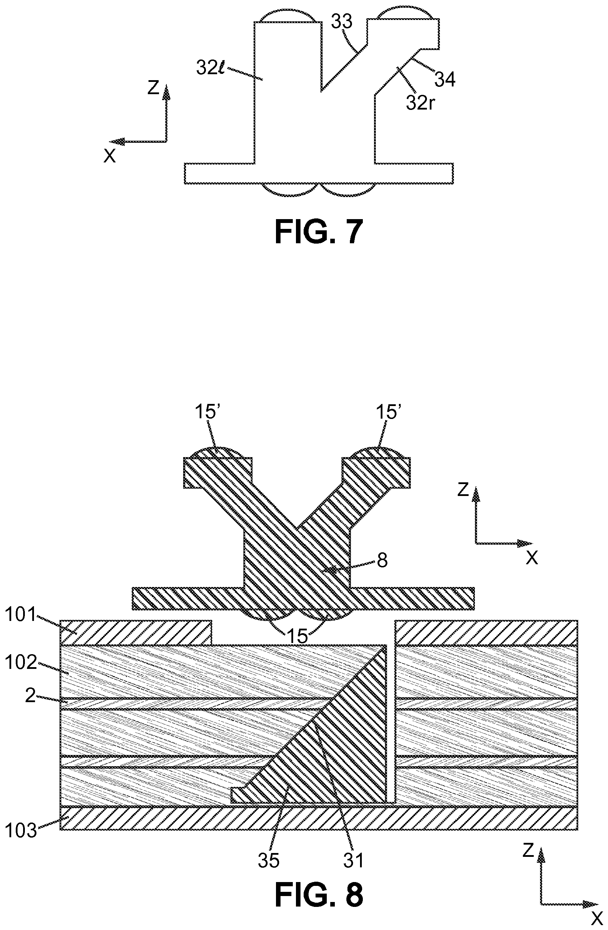

The part which deflects the light signals to make them exit the PCB may be made distinct from the part which is used to offset them. According to a fourth embodiment, which is shown on Fig. 8, this dissociation of functions is performed by providing the optical coupling system in two separate pieces. The optical coupling system still comprises a coupling device 8, which has a similar geometry to that of the second part 30 of the third embodiment shown on Fig. 5. The optical coupling system 106 further comprises a separate mirror mount 35 which carries the first mirror 31. The wording "mirror mount" 35 refers to any component able to deflect an optical signal. The core 2 is adapted to accommodate this mirror mount 35. Alternatively, a reflective layer is provided on a suitable location on any facet of the body 3.

The mirror mount 35 and the optical coupling device 8 are provided in precise respective alignment. The lenses 15 which couple the optical coupling device 8 to the optical interface of the PCB are provided on the coupling device 8. In such a case, the lenses 15 on that side might differ from row to row, because the distance to the respective layers of the PCB 1 are different.

Fig. 7 now shows a fifth embodiment of the invention. This embodiment is also described by reference to Fig. 8. Compared to this previous embodiment, the present one differs in that the left branch 321 is straight, and does not comprise any reflective arrangement for the light transmitted through it. The offsetting is provided only by the branch 32r, in the way which was described above, in relation to Fig. 5.

If, in a not-shown embodiment, the PCB comprised an odd number of rows, such a straight branch could be provided for the middle row, while offsetting could be provided by the branch 32r and a branch symmetrical to the branch 32r with respect to a central plane passing through the centre of the straight branch, parallel to the Y-Z plane.

As shown on the two previous embodiments, both the light-beam shaping (with the lenses 15, 15') and the offsetting are provided on the optical coupling device 8.

According to a sixth embodiment, as shown on Fig. 6, these functions are separated. The optical device 8 provides for the light-beam shaping, and the offsetting is provided by the mirror mount 35. The mirror mount 35 is provided with distinct mirror portions 141, 142, 143 separated from one another by transition portions 18, sensibly as described in relation to Figs. 1 to 3 for the first embodiment (except that they were located on the coupling device 8). The coupling device comprises only the two sets of lenses 15 and 15' as shown on Fig. 6. For example, they are provided in parallel planes, each parallel to the X-Y plane.

A seventh embodiment is now shown on Fig. 9. Although the previous embodiments show offsetting of the light planes together with a global 90° reflection (i.e. the interfaces of the optical coupling system are orthogonal to one another), this embodiment provides for parallel first and second interfaces of the coupling device 8. In this example, the coupling device 8 is integral. For example, an additional mirror 37 is provided in the coupling device 8, between the first and second interfaces, and in particular between the interface to the PCB and the offsetting mirror portions 141, 142, 143. The mounting of the optical coupling device 8 to the PCB is modified accordingly.

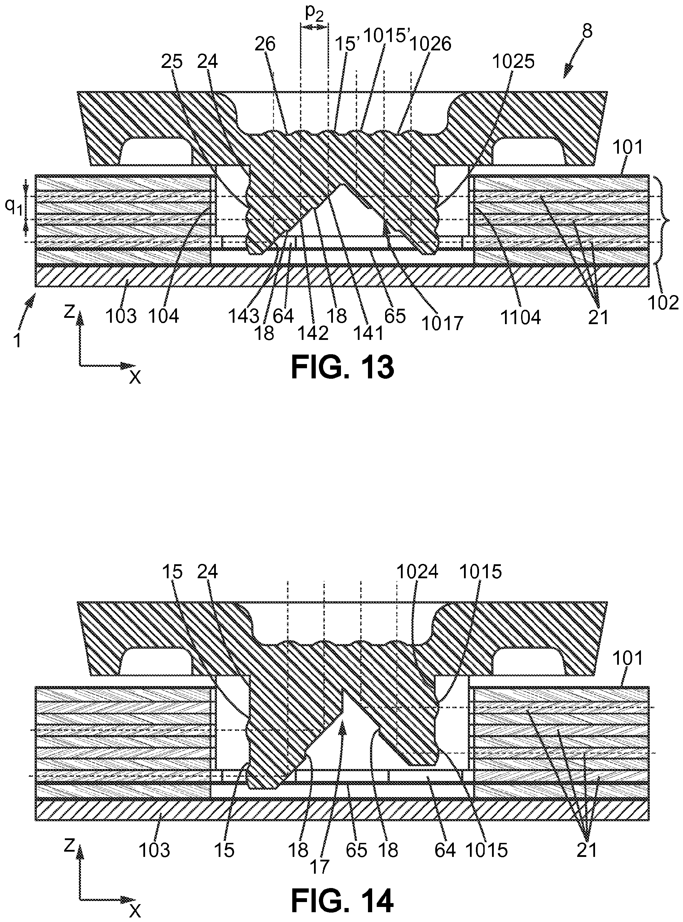

Fig. 13 shows an eighth embodiment of the invention. With reference to Fig. 3, the optical coupling device of this embodiment is duplicated by symmetry with respect to the Y-Z plane. The symmetrical features of the device are provided with an additional reference 1000 with respect to the references of the embodiment of Fig. 3. The coupling device 8 comprises an interface 1025 which is interfaced with an optical interface 1104 of the board 1. A reflective arrangement 1017 is provided in the symmetrical part of the optical coupling device 8. The optical interface 26 and 1026 can be associated with that of a corresponding optical device such as a MT-ferrule having a suitable number of rows (6 rows in the present exemplary embodiment). Further, the plane of symmetry can be chosen so that the distance between the two central transmission regions 15' and 1015' be equal to the pitch p₂. In the present example, it will be noted that the optical coupling device 8 is referenced to the board 1 by reference feet 64 which rest on a reference layer 65 of the circuit board, the precise position of which with respect to the optical layer 102 is known. Unlike in the first embodiment, the reference layer 65 is located below the optical layers in the layer stack.

Fig. 14 now shows a ninth embodiment. This embodiment is suitable with three or more layers, but is described with four optical layers in the board 1. Unlike the above embodiment where 3 layers of the board 1 are associated to six rows of the MT-ferrule, the present embodiment has four layers of the board 1 corresponding with four rows of the MT-ferrule.

Compared to Fig. 3, the main difference is that, instead of having the optical interface 104 of the circuit board 1 on a given side with respect to the optical coupling device 8, the optical interface 104 of the board is now distributed on both sides of the coupling device 8. Here, these two faces are parallel to one another, but not coplanar. The optical coupling device is adapted to conform to this interface. The coupling device 8 has a left-hand side 24 which is designed to transfer light from the first two rows of the MT-ferrule to only two of the layers of the board 1, whereas the right-hand side 1024 is designed to transfer light from the last two rows of the MT-ferrule to two other layers of the board 1. In the present example, the second and fourth layers (from the top) of the stack are associated with the first two rows of the MT-ferrule. The coupling device 8 has a reflective arrangement 17 which is adapted to correspond to this scheme. Mirrors provided on the right-hand side are symmetrical with respect to those of the left-hand side with respect to the Y-Z plane, and offset with respect thereto along the Z direction. The mirrors can be made longer to encompass more of the light transmitted by/to a given layer, without risking to reflect also light from a neighbour optical layer. The transition regions 18_ can here extend vertically between two neighbouring mirrors. Lenses 15 may be provided only in suitable locations. The part of the face 24 of the optical coupling device which faces a not-operational optical layer may remain flat.

In all the above embodiments, all the light signals from any given layer are associated to a given same row of the MT-ferrule. It means that the cross-sectional profile of the coupling device 8 is the same for all transmission regions of a given row.

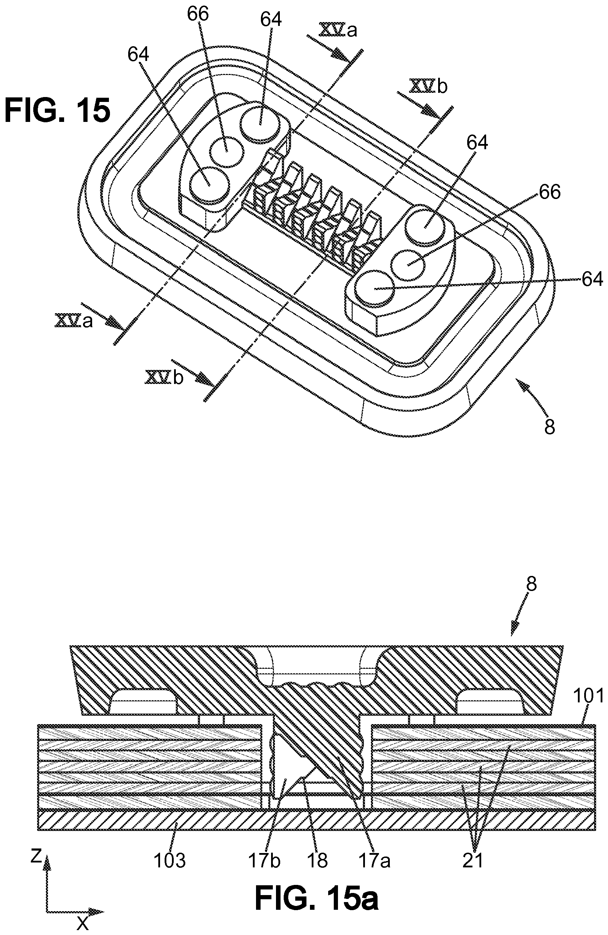

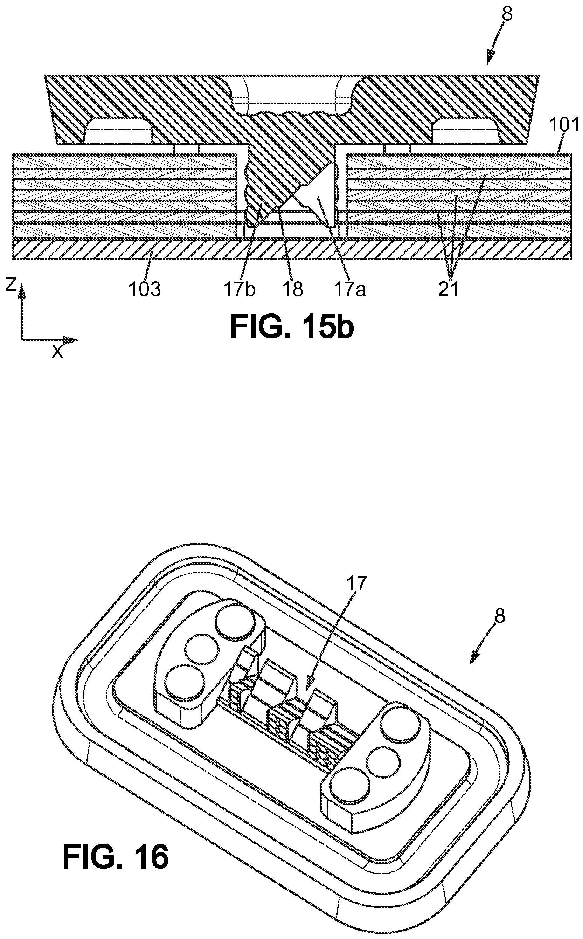

According to other embodiments, as shown on Figs. 15 and 16, it is possible that only a sub-set of transmission regions of a given layer are associated with a corresponding sub-set of transmission regions of the MT-ferrule. The other transmission regions of the same row of the MT-ferrule might be associated with other transmission regions of the board 1. For example, half of the transmission regions of a given row of the MT-ferrule will be associated with transmission regions of the left-hand-side of a layer of the board, and the other half of the transmission regions of the same row of the MT-ferrule will be associated with transmission regions of the right-hand-side of the same layer of the board. As shown on Fig. 15, the even transmission regions are associated with the left-hand side whereas the odd are associated with the right-hand side. Other configurations are possible, as shown on Fig. 16, where the pattern can be customized (for example, one on each side, then two on each side, then three on each side along the width).

As shown on Figs. 15a and 15b, the coupling device 8 has alternated reflexive arrangements 17a, 17b along the width.

Alignment holes 66 for alignment with the MT-ferrule are also visible on these Figures.

The person skilled in the art will be able to combine specific features of the above embodiments, depending on the requirements.

It will be clear to the person skilled in the art that, although the description sometimes makes reference to light being transmitted from one location to another (this is for the sake of clarity of the description only), but that light could as well propagate in the opposite direction depending on the kind of applications, apart from the cases where it is clear from the context that it is not possible.

## Claims

1. An optical coupling system comprising:
a coupling device comprising:
a first optical interface (25) comprising a first set of rows, the rows of the first set being spaced apart one from another by a first pitch (p₁), each row of the first set being associated to a corresponding row of an optical interface (104) of an optical circuit board,
a second optical interface (26) comprising a second set of rows, said rows of the second set being spaced apart one from another by a second pitch (p₂) different from the first pitch (p₁), each row of the second set being associated to a corresponding row of an optical interface (105) of a optical device (4),
a reflective arrangement (141, 42, 143 ; 31, 33, 34; 37), adapted to transmit light between the first and second interfaces, and comprising at least one reflective portion adapted to offset light transmitted between a first row of the first set of rows and a corresponding first row of the second set of rows with respect to light transmitted between a second row of the first set of rows and a corresponding second row of the second set of rows, wherein
each row of the first set of rows comprises a plurality of first transmission regions each adapted to be optically coupled respectively to a corresponding transmission region of the optical interface of the optical circuit board, wherein
each row of the second set of rows comprises a plurality of second transmission regions each adapted to be optically coupled respectively to a corresponding transmission region of the optical interface of the optical device and wherein
each second transmission region is optically associated with a respective first transmission region, the system further comprising
an optical circuit board (1) comprising an optical interface (104) having a plurality of rows (101, 102, 103) each associated to a corresponding row of the first set of rows of the optical coupling device, each row of the optical interface of the optical circuit board having a plurality of transmission regions, each optically coupled respectively to a corresponding transmission region of a corresponding row of the first set of rows of the optical coupling device.

2. A system according to claim 1 wherein the first transmission regions are coplanar.

3. A system according to claim 1, wherein the first transmission regions are distributed on distinct faces (24, 1024) of the first optical interface.

4. A system according to claim 1, wherein the second transmission regions are coplanar.

5. A system according to any of claims 1 to 4, wherein a light beam forming structure (15, 15') is adapted to optically couple one optical interface among the first optical interface (25) and the second optical interface (26) to one of the optical interfaces among the optical interface of the optical device and the optical interface of the optical circuit board.

6. A system according to any of claims 1 to 5 wherein the reflective arrangement is unitary.

7. A system according to any claims 1 to 6 wherein the optical coupling device is a unitary device.

8. A system according to any of claims 1 to 7, wherein the rows of the first set are offset from one another along a depth axis (Z) normal to a top surface of the optical circuit board.

9. A system according to any of claims 1 to 8, wherein the rows of the second set are offset from one another along a surface axis (X) parallel to a top surface of the optical circuit board.

10. A system according to any of claims 1 to 9, wherein the reflective arrangement comprises one mirror comprising a plurality of staggered mirror portions (141, 142, 143) each mirror portion being associated to both a respective first row and a respective second row.

11. A system according to claim 1, wherein two neighbour mirror portions are linked together by a linking surface (18) which is not coplanar with the two neighbour mirror portions.

12. A system according to any of claims 1 to 11, wherein the first optical interface extends in a first plane parallel to a plane in which extends the second optical interface.

13. A system according to any of claims 1 to 12, wherein the reflective arrangement comprises at least one reflective portion (32r) adapted to deflect light transmitted between the first row of the first set of rows and the corresponding first row of the second set of rows, and a portion (321) adapted to transmit light without reflection between the second row of the first set of rows and the corresponding second row of the second set of rows.

14. A system according to any of the preceding claims, wherein at least one of said rows comprises only one transmission region.

## Patentansprüche

1. Ein optisches Kopplungssystem umfassend:
eine Kopplungseinrichtung umfassend:
eine erste optische Schnittstelle (25), umfassend einen ersten Satz von Reihen, wobei die Reihen des ersten Satzes voneinander beabstandet angeordnet sind, durch einen ersten Abstand (p₁), wobei jede Reihe des ersten Satzes von Reihen mit einer entsprechenden Reihe einer optischen Schnittschnelle (104) einer optischen Leiterplatte assoziiert ist,
eine zweite optische Schnittstelle (26), umfassend einen zweiten Satz von Reihen, wobei diese Reihen des zweiten Satzes voneinander beabstandet sind, durch einen anderen zweiten Abstand (p₂), der von dem ersten Abstand (p₁) verschieden ist, wobei jede Reihe des zweiten Satzes mit einer entsprechenden Reihe einer optischen Schnittstelle (105) einer optischen Einrichtung (4) assoziiert ist,
eine reflektierende Anordnung (141, 142, 143; 31, 33, 34; 37), die dazu eingerichtet ist, Licht zwischen den ersten und zweiten Schnittstellen zu übertragen und die zumindest einen reflektierenden Teil umfasst, der dazu eingerichtet ist, Licht, das zwischen einer ersten Reihe des ersten Satzes von Reihen und einer entsprechenden ersten Reihe des zweiten Satzes von Reihen übertragen wird bezüglich des Lichtes, das zwischen einer zweiten Reihe des ersten Satzes von Reihen und einer entsprechenden zweiten Reihe des zweiten Satzes von Reihen übertragen wird, zu verschieben, wobei
jede Reihe des ersten Satzes von Reihen eine Vielzahl von ersten Übertragungsbereichen umfasst, wobei jeder dazu eingerichtet ist, optisch mit einem entsprechenden Übertragungsbereich einer optischen Schnittstelle der optischen Leiterplatte gekoppelt zu werden, wobei
jede Reihe des zweiten Satzes von Reihen eine Vielzahl von zweiten Übertragungsbereichen umfasst, wobei jeder dazu eingerichtet ist, optisch mit einem entsprechenden Übertragungsbereich einer optischen Schnittstelle der optischen Einrichtung gekoppelt zu werden, und wobei
jeder zweite Übertragungsbereich optisch mit einem entsprechenden ersten Übertragungsbereich assoziiert ist, wobei das System weiterhin
eine optische Leiterplatte (1) umfasst, die eine optische Schnittstelle (104) umfasst, die eine Vielzahl von Reihen (101, 102, 103) aufweist, wobei jede mit einer entsprechenden Reihe des ersten Satzes von Reihen der optischen Kopplungseinrichtung assoziiert ist, wobei
jede Reihe der optischen Schnittstelle der optischen Leiterplatte eine Vielzahl von Übertragungsbereichen aufweist, wobei jeder optisch mit einem entsprechenden Übertragungsbereich einer korrespondierenden Reihe des ersten Satzes von Reihen der optischen Kopplungseinrichtung gekoppelt ist.

2. System nach Anspruch 1, wobei die ersten Übertragungsbereiche koplanar sind.

3. System nach Anspruch 1, wobei die ersten Übertragungsbereiche auf einer bestimmten Fläche (24, 1024) der ersten optischen Schnittstelle verteilt sind.

4. System nach Anspruch 1, wobei die zweiten Übertragungsbereiche koplanar sind.

5. System nach einem der Ansprüche 1 bis 4, wobei eine lichtstrahlformende Struktur (15, 15') dazu eingerichtet ist, eine optische Schnittstelle der ersten optischen Schnittstelle (25) und der zweiten optischen Schnittstelle (26) mit einer optischen Schnittstelle der optischen Einrichtung und der optischen Schnittstelle der optischen Leiterplatte zu koppeln.

6. System nach einem der Ansprüche 1 bis 5, wobei die reflektierende Anordnung unitär ist.

7. System nach einem der Ansprüche 1 bis 6, wobei die optische Kopplungseinrichtung eine unitäre Einrichtung ist.

8. System nach einem der Ansprüche 1 bis 7, wobei die Reihen des ersten Satzes von Reihen versetzt zueinander, entlang der Tiefenachse (Z), normal zu der Oberfläche der optischen Leiterplatte angeordnet sind.

9. System nach einem der Ansprüche 1 bis 8, wobei die Reihen des zweiten Satzes von Reihen versetzt zueinander, entlang einer Oberflächenachse (X) parallel zu der Oberfläche der optischen Leiterplatte angeordnet sind.

10. System nach einem der Ansprüche 1 bis 9, wobei die reflektierende Anordnung einen Spiegel umfasst, der eine Vielzahl von gestapelten Spiegelteilen (141, 142, 143) umfasst, wobei jeder Spiegelteil mit sowohl einer der ersten Reihen und einer entsprechenden zweiten Reihe assoziiert ist.

11. System nach Anspruch 1, wobei zwei benachbarte Spiegelteile durch eine Verbindungsoberfläche (18) miteinander verbunden sind, welche nicht koplanar mit den zwei benachbarten Spiegelteilen ist.

12. System nach einem der Ansprüche 1 bis 11, wobei sich die erste optische Schnittstelle in einer ersten Ebene erstreckt, die parallel zu einer Ebene ist, in welcher sich die zweite optische Schnittstelle erstreckt.

13. System nach einem der Ansprüche 1 bis 12, wobei die reflektierende Anordnung zumindest einen reflektierenden Teil (32r) umfasst, der dazu eingerichtet ist, Licht das zwischen der ersten Reihe des ersten Satzes von Reihen und der entsprechenden ersten Reihe des zweiten Satzes von Reihen übertragen wird, abzulenken, und
einen Teil (321), der dazu eingerichtet ist, Licht ohne Reflektion zwischen der zweiten Reihe des ersten Satzes von Reihen und der entsprechenden zweiten Reihe des zweiten Satzes von Reihen zu übertragen.

14. System nach einem der vorhergehenden Ansprüche, wobei zumindest eine der Reihen nur einen Übertragungsbereich umfasst.

## Revendications

1. Un système de couplage optique comprenant :
un dispositif de couplage comprenant :
une première interface optique (25) comprenant un premier ensemble de rangées, les rangées du premier ensemble étant espacées les unes des autres d'un premier pas (p₁), chaque rangée du premier ensemble étant associée à une rangée correspondante d'une interface optique (104) d'une carte de circuit optique,
une seconde interface optique (26) comprenant un second ensemble de rangées, lesdites rangées du second ensemble étant espacées les unes des autres d'un second pas (p₂) différent du premier pas (p₁), chaque rangée du second ensemble étant associée à une rangée correspondante d'une interface optique (105) d'un dispositif optique (4),
un agencement réflecteur (141, 142, 143 ; 31, 33, 34 ; 37), apte à transmettre de la lumière entre la première et la seconde interface, et comprenant au moins une partie réflectrice apte à décaler la lumière transmise entre une première rangée du premier ensemble de rangées et une première rangée correspondante du second ensemble de rangées par rapport à la lumière transmise entre une seconde rangée du premier ensemble de rangées et une seconde rangée correspondante du second ensemble de rangées, dans lequel
chaque rangée du premier ensemble de rangées comprend une pluralité de premières régions de transmission aptes à être chacune optiquement couplée respectivement à une région de transmission correspondante de l'interface optique de la carte de circuit optique, dans lequel
chaque rangée du second ensemble de rangées comprend une pluralité de secondes régions de transmission aptes à être chacune optiquement couplées respectivement à une région de transmission correspondante de l'interface optique du dispositif optique et dans lequel
chaque seconde région de transmission est optiquement associée à une première région de transmission respective, le système comprenant en outre
une carte de circuit optique (1) comprenant une interface optique (104) possédant une pluralité de rangées (101, 102, 103) associées chacune à une rangée correspondante du premier ensemble de rangées du dispositif de couplage optique, chaque rangée de l'interface optique de la carte de circuit optique possédant une pluralité de régions de transmission, couplées chacune optiquement respectivement à une région de transmission correspondante d'une rangée correspondante du premier ensemble de rangées du dispositif de couplage optique.

2. Un système selon la revendication 1, dans lequel les premières régions de transmission sont coplanaires.

3. Un système selon la revendication 1, dans lequel les premières régions de transmission sont distribuées sur des faces distinctes (24, 1024) de la première interface optique.

4. Un système selon la revendication 1, dans lequel les secondes régions de transmission sont coplanaires.

5. Un système selon l'une des revendications 1 à 4, dans lequel une structure de formation de faisceau lumineux (15, 15') est apte à coupler optiquement une interface optique parmi la première interface optique (25) et la seconde interface optique (26) à l'une des interfaces optiques parmi l'interface optique du dispositif optique et l'interface optique de la carte de circuit optique.

6. Un système selon l'une des revendications 1 à 5, dans lequel l'agencement réflecteur est unitaire.

7. Un système selon l'une des revendications 1 à 6, dans lequel le dispositif de couplage optique est un dispositif unitaire.

8. Un système selon l'une des revendications 1 à 7, dans lequel les rangées du premier ensemble sont décalées les unes par rapport aux autres suivant un axe de profondeur (Z) perpendiculaire à une surface supérieure de la carte de circuit optique.

9. Un système selon l'une des revendications 1 à 8, dans lequel les rangées du second ensemble sont décalées les unes par rapport aux autres suivant un axe de surface (X) parallèle à une surface supérieure de la carte de circuit optique.

10. Un système selon l'une des revendications 1 à 9, dans lequel l'agencement réflecteur comprend un miroir comprenant une pluralité de parties de miroir étagées (141, 142, 143), chaque partie de miroir étant associée à la fois à une première rangée respective et à une seconde rangée respective.

11. Un système selon la revendication 1, dans lequel deux parties de miroir voisines sont reliées ensemble par une surface de liaison (18) qui n'est pas coplanaire avec les deux parties de miroir voisines.

12. Un système selon l'une des revendications 1 à 11, dans lequel la première interface optique s'étend dans un premier plan parallèle à un plan dans lequel s'étend la seconde interface optique.

13. Un système selon l'une des revendications 1 à 12, dans lequel l'agencement réflecteur comprend au moins une partie réflectrice (32r) apte à dévier la lumière transmise entre la première rangée du premier ensemble de rangées et la première rangée correspondante du second ensemble de rangées, et une partie (321) apte à transmettre la lumière sans réflexion entre la seconde rangée du premier ensemble de rangées et la seconde rangée correspondante du second ensemble de rangées.

14. Un système selon l'une des revendications précédentes, dans lequel au moins l'une desdites rangées ne comprend qu'une région de transmission.
